**Europäisches Patentamt**

(19) **European Patent Office**

**Office européen des brevets**

(11) Veröffentlichungsnummer: **0 010 628**
**B1**

(12) # EUROPÄISCHE PATENTSCHRIFT

(45) Veröffentlichungstag der Patentschrift:
12.10.83

(51) Int. Cl.³: **C 08 J 9/06, C 08 L 23/02**

(21) Anmeldenummer: **79103720.3**

(22) Anmeldetag: **01.10.79**

(54) **Verfahren zur Herstellung von Schaumstoffen aus Polyolefinen.**

(30) Priorität: **26.10.78 DE 2846646**

(43) Veröffentlichungstag der Anmeldung:
**14.05.80 Patentblatt 80/10**

(45) Bekanntmachung des Hinweises auf die Patenterteilung:
**12.10.83 Patentblatt 83/41**

(84) Benannte Vertragsstaaten:
**AT BE CH DE FR GB IT NL**

(56) Entgegenhaltungen:
CH-A-596 252
DE-A-1 181 406
DE-A-2 654 029
FR-A-2 235 968
GB-A-1 219 469
GB-A-1 282 564
US-A-3 549 563

CHEMICAL ABSTRACTS, Band 69, Nr. 24, 9. Dezember 1968, Zusammenfassung Nr. 97452j, Seite 9149, Columbus, Ohio, US

CHEMICAL ABSTRACTS, Band 86, Nr. 20, 16. Mai 1977, Zusammenfassung Nr. 141232a, Seite 56, Columbus, Ohio, US

(73) Patentinhaber: **DYNAMIT NOBEL AKTIENGESELLSCHAFT, Patentabteilung Postfach 1209, D-5210 Troisdorf, Bez. Köln (DE)**

(72) Erfinder: **Kühnel, Werner, 5206 Neunkirchen-Schöneshof (DE)**
Erfinder: **Spielau, Paul, Dr., Van-Gogh-Platz 10, D-5210 Troisdorf-Eschmar (DE)**

**Die Akte enthält technische Angaben, die nach dem Eingang der Anmeldung eingereicht wurden und die nicht in dieser Patentschrift enthalten sind.**

ACTORUM AG

## Verfahren zur Herstellung von Schaumstoffen aus Polyolefinen

Gegenstand der Erfindung ist ein Verfahren zur Herstellung von Schaumstoffen aus Polyolefinen durch peroxidische Vernetzung und Verschäumen mit einem chemischen Schäummittel unter Zusatz eines Verschäumungshilfsmittels.

Es ist bekannt, Polyolefine mit organischen Peroxiden und Schäummitteln zu versetzen. Das Vermischen der Polyolefine mit den Vernetzungs- und Schäummittel sowie ggf. üblichen Zusatzstoffen kann auf einem Mischwalzwerk oder einem Extruder unter nachfolgender Herstellung der Formkörper, wie Platten oder kontinuierlicher Bahnen unterhalb der Zersetzungstemperatur des Peroxids erfolgen. Anschliessend erfolgt die Vernetzung des Polyolefins unterhalb des Zersetzungspunktes des Schäummittels durch Zersetzen des Vernetzungsmittels. Anschliessend wird die Temperatur bis zum Zersetzungsbereich des Schäummittels erhöht, so dass durch die dabei entstehenden Gase das Polyolefin geschäumt wird. Das für die Schäumung bevorzugt verwendete Schäummittel ist das Azodicarbonamid. Hierbei entsteht ein Polyolefinschaum mit relativ hoher Dichte und unruhiger Oberfläche (US-PS 3 098 831, DE-AS 1 694 130).

Prinzipiell kann die Dichte des Schaumstoffs durch Variierung der Schäummittelmenge reguliert werden. Jedoch gelingt es dabei nicht, gleichzeitig einen Schaumstoff mit glatter Oberfläche herzustellen.

Zur Erhöhung der Gasausbeute ist es aus der DE-PS 1 936 098 bekannt, dem Schäummittel Azodicarbonamid als Verschäumungshilfsmittel 0,05 bis 10 Gew.-% einer Chromverbindung zuzusetzen.

Um eine merklich erhöhte Gasausbeute und damit eine Reduzierung des Raumgewichts (Dichte, auch Rohdichte genannt) des Schaumstoffs zu erzielen, sind jedoch relativ grosse Mengen an Chromverbindung erforderlich, was sich in mehrfacher Hinsicht als nachteilig erweist. Die Schaumstoffe werden farblich verändert, die Schaumstruktur ist unregelmässig und die Oberfläche ungleichmässig.

Der vorliegenden Erfindung liegt die Aufgabe zugrunde, einen gleichmässigen Schaumstoff mit guter Oberflächenbeschaffenheit und niedriger Rohdichte zu schaffen.

Die Aufgabe wird erfindungsgemäss dadurch gelöst, dass man dem Polyolefin ausser dem Peroxid und dem Schäummittel sowie ggf. weiteren Hilfsmitteln als Verschäumungshilfsmittel ein sterisch gehindertes Phenol und/oder ein organisches Phosphonit gemäss Patentanspruch 1 zusetzt.

Bei der Durchführung des erfindungsgemässen Verfahrens kann man so vorgehen, dass das Vermischen der Polyolefine mit den Vernetzungsmitteln, Schäummitteln, ggf. üblichen Zusatzstoffen sowie den erfindungsgemäss verwendeten Verschäumungshilfsmitteln auf einem Mischwalzwerk oder auf einem Extruder unter nachfolgender Herstellung der Formkörper, wie Platten ode kontinuierlicher Bahnen, bei Temperaturen unter halb des Zersetzungspunktes des Peroxids erfolgt Die mittlere Verweilzeit in der Mischvorrichtung ist so bemessen, dass eine Vernetzung der zu verschäumenden Mischung in diesem Stadium im wesentlichen unterbleibt. Anschliessend erfolg die Vernetzung des Polyolefins unterhalb des Zersetzungspunktes des Schäummittels durch Zersetzung des Vernetzungsmittels unter Erhöhung der Schmelzviskosität des Polyolefins. Bei weiterer Temperaturerhöhung bei oder oberhalb der Zersetzungstemperatur des Schäummittels verschäumt der Formkörper. Je nach Menge des Schäummittels, des Verschäumungshilfsmittels des Vernetzungsmittels und der Verfahrensbedingungen entsteht ein Schaum mit einer Rohdichte von 15 kg/m$^3$ bis 300 kg/m$^3$, vorzugsweise 20 bis 200 kg/m$^3$.

Bevorzugt wird das erfindungsgemässe Verfahren zur Herstellung fortlaufender Schaumstoffbahnen angewendet, beispielsweise nach dem in der DE-AS 1 694 130 beschriebenen Verfahren.

Als Schäummittel wird zweckmässig ein in der Hitze gasabspaltendes Mittel verwendet, dessen Zersetzungstemperatur höher liegt als diejenige des verwendeten organischen Peroxids. Geeignete Schäummittel sind z. B. Azodicarbonamid und oder p,p'-Oxi-bis-benzol-sulfonylhydrazid und oder Dinitrosopentamethylentetramin und dgl.

Bevorzugte Schäummittel sind solche mit einem Zersetzungspunkt bzw. Zersetzungsbereich ab 190°C. Besonders bevorzugt wird Azodicarbonamid. Die anzuwendende Menge an Schäummittel richtet sich nach der angestrebten Rohdichte des herzustellenden Schaumstoffs und liegt im allgemeinen zwischen 0,5 bis 25 Gew.-%, vorzugsweise bei 1 bis 20 Gew.-%, bezogen auf die zu einem Formkörper zu verformende Gesamtmischung.

Die erfindungsgemäss als Verschäumungshilfsmittel eingesetzten Stoffe, werden im allgemeinen in einer Menge von 0,05 Gew.-% bis 3 Gew.-% bezogen auf eingesetztes Polyolefin, verwendet Sie wirken überraschenderweise als die Schaumstoffdichte reduzierende Mittel, denn — ausgehend von einer im wesentlichen durch die Schäummittelmenge vorgegebenen Rohdichte — gelingt es bei Zusatz des erfindungsgemässen Verschäumungshilfsmittels zu der zu verschäumenden Mischung eine Reduzierung der Rohdichte von z. E bis zu 20%, ggf. auch mehr als 20% zu erreichen Überraschenderweise wird gleichzeitig auch ein Schaum mit glatter Oberfläche erhalten. Durch das erfindungsgemäss verwendete Verschäumungshilfsmittel wird offenbar die Gasausbeute des Schäummittels erhöht, so dass es prinzipiell möglich ist, die jeweils gewünschte Rohdichte des Schaumstoffs unter Anwendung geringerer Menge an Schäummittel einzustellen.

Als organisches Peroxid können je nach Polyolefinzusammensetzung 2,5-Dimethyl-2,5-d (tert.-butylperoxy)-hexan, tert.-Butylhydroperoxid, Cumyl-tert.-butylperoxid, Di-tert.-butylperoxid, vorzugsweise Dicumperoxid verwendet werden. Die Peroxide werden in Mengen von 0,3 bis 1,5 Gew.-% eingesetzt, bezogen auf das Polyolefin.

Als Polyolefine können Polyäthylen oder Polypropylen, ggf. auch deren Gemische eingesetzt werden, vorzugsweise Polyäthylen und zwar Niederdruck-Polyäthylen der Dichte 0,94 bis 0,97 g/cm³ und/oder Hochdruckpolyäthylen der Dichte 0,91 bis etwa 0,94 g/cm³, vorzugsweise Hochdruckpolyäthylen. Unter der Bezeichnung «Polyolefine» werden aber auch verstanden: Mischpolymere, vorzugsweise solche, zu deren Herstellung Monomerengemische mit überwiegendem Anteil an Äthylen verwendet werden sowie deren Gemische mit Homopolymeren. Solche Mischpolymere sind z. B. Äthylen-Propylen-Mischpolymere, Äthylen-Butylen-Mischpolymere, Mischpolymere aus Äthylen und Vinylacetat und dessen Derivaten, Mischpolymerisate aus Äthylen und Acrylsäureestern oder deren Derivaten, Mischpolymere aus Äthylen und Methacrylsäure oder deren Derivaten oder dgl. Auch Mischungen der oben genannten Polyolefine mit Kautschuken und/oder Kunststoffen können gemäss der Erfindung zu Schaumstoffen verarbeitet werden. Darunter werden z. B. Mischungen verstanden, die zu 50 Gew.-% und mehr aus Polyolefinen bestehen. Mit Polyolefinen mischbare Kautschuke sind z. B. Naturkautschuk, Äthylen-Propylen-Kautschuk, Butylkautschuk, Polyisobutylen, ABS-Kautschuk, Polybutadien, Polybuten und Polyisopren. Mit Polyolefinen mischbare Kunstoffe sind z. B. Polystyrol, chloriertes Polyäthylen, sulfochloriertes Polyäthylen oder dgl.

Als übliche Zusatzstoffe, die gewöhnlich zusammen mit Kunststoffen auf Polyolefinbasis verwendet werden, sind z. B. Lichtschutzmittel, Pigmente, Füllstoffe, flammhemmende Mittel, antistatische Mittel, Gleitmittel oder dgl. zu nennen, die dem zu vernetzenden und zu verschäumenden Gemisch vor der Verarbeitung zu einem Formkörper zugesetzt werden können.

Bei der bevorzugten Anwendung des erfindungsgemässen Verschäumungshilfsmittels in Kombination mit Azodicarbonamid erfolgt die Vernetzung ab etwa 160°C und die Verschäumung bei Temperaturen ab etwa 190°C bis etwa 250°C, bevorzugt bis etwa 220°C.

Als sterisch gehinderte Phenole und/oder Diphosphonit kommen in erster Linie solche infrage, deren Schmelzpunkte oberhalb Raumtemperatur, jedoch unterhalb der Verschäumungstemperatur liegen. Im allgemeinen liegen die Schmelzpunkte im Bereich von etwa 40 bis 170°C.

Die erfindungsgemäss zu verwendenden sterisch gehinderte Phenole weisen 1 bis 4 phenolisch gebundene OH-Gruppen auf, wobei die phenolischen Struktureinheiten jeweils einwertig sind.

Im einzelnen seien genannt:
Pentaerythrithyl-tetrakis[3-(3,5-di-tert.butyl-4-hydroxiphenyl)-propionat] (I) Octadecyl-3-(3,5-di- tert.butyl-4-hydroxiphenyl)-propionat (II).
2,2′-Methylen-bis-(4-methyl-6-tert.butylphenol) (III)
2,2′-Methylen-bis-(4-äthyl-6-tert.butylphenol) (IV)
2,6-Di-2′-hydroxi-3-tert.butyl-5′-methylbenzyl)-4-methylphenol) (V)
2,6-Di-tert.butyl-4-methylphenol (VI)
2-methyl-6-tert.butylphenol (VII)
2,6-Diisopropylphenol (VIII)
2,2-Bis-(4-hydroxiphenyl)-propan (IX)

Als sterisch gehinderte Phenole sind auch solche zu nennen, die sich von Phosphonsäure bzw. Phosphonsäuredialkylestern herleiten.

Hierzu gehört z. B. 3,5-Di-tert.butyl-4-hydroxibenzyl-phosphonsäurediäthylester sowie der entsprechende Dimethylester.

Auch -S-Gruppen als Bindeglieder enthaltende sterisch gehinderte Phenole sind geeignet, z. B. 4,4′-Thio-bis-(3-methyl-6-tert.butyl-phenyl) und 2,2′-Thiodiäthylbis-[3-(3,5-di-tert.butyl-4-hydroxiphenyl)-propionat].

Besonders geeignet sind die phenolischen Verbindungen I bis V und IX.

Die organischen Diphosphonite leiten sich insbesondere von 4,4-Biphenylendiphosphoniten her, z. B. Tetrakis-(2,4-di-tert.butylphenyl)4,4′-biphenylendiphosphonit.

Die Verschäumungshilfsmittel können als solche, ggf. in Mischung mit dem Schäummittel, der zu verschäumenden Mischung zugesetzt werden, ggf. aber auch in Form eines Konzentrats in einem Polyolefin.

Die erfindungsgemäss hergestellten Schaumstoffe können Isoliermaterial in der Baubranche mit verbesserter Wärmeisolierung infolge der glatten Oberfläche und der niedrigen Rohdichte, in der Verpackungsindustrie und vielfältig als Auskleidung sowohl von Böden, Decken und Wänden eingesetzt werden, wobei ebenfalls die niedrige Rohdichte in Verbindung mit der glatten Oberfläche von Vorteil ist.

Die folgenden Beispiele dienen der weiteren Erläuterung der Erfindung.

Der Schmelzindex wurde nach DIN 53735 (190°C/2,15 kg) gemessen. Das eingesetzte Hochdruckpolyäthylen hatte einen Schmelzindex von 4 g/10 min und eine Dichte von 0,92 g/cm³.

Das eingesetzte Äthylen-Vinylacetat-Copolymerisat (Gew.-Verhältnis 92:8) hatte einen Schmelzindex von 5 g/10 min, gemessen nach DIN 53735 (190°C/2,15 kg).

Das eingesetzte Niederdruckpolyäthylen hatte einen Schmelzindex von 18 g/10 min, gemessen wie oben. Die Dichte war 0,95.

Vergleichsbeispiel 1

84 Gew.-Teile Hochdruckpolyäthylen
1 Gew.-Teil Dicumylperoxid
15 Gew.-Teile Azodicarbonamid
werden auf einem Walzwerk bei 110°C Walzenoberflächentemperatur auf 20 min Walzzeit compoundiert, dann das Material als Walzfell abgezogen und in einer Presse unter Druck bei 130°C und 8 min Stehzeit zu einer 4 mm dicken Platte mit glatter Oberfläche abgepresst. Aus der Platte werden Proben von 8 cm Durchmesser ausgeschnitten, die in einem Trockenschrank bei 210°C zu Schaumkörpern der Dicke 13,5 mm und der Rohdicke von 30 kg/m³ ausgeschäumt werden. Die Rohdichte des Schaums ist durch die Rezeptur vorgegeben.

Beispiel 1

84 Gew.-Teile Hochdruckpolyäthylen (wie Vergleichsbeispiel 1)
1 Gew.-Teil Dicumylperoxid
15 Gew.-Teile Azodicarbonamid
0,3 Gew.-Teile des erfindungsgemässen Verschäumungshilfsmittels 2,2'-methylen-bis-(4-methyl-6-tert.butylphenol) (Mol-Gew. 341).
Die Verarbeitung und die Verarbeitungsbedingungen sind die gleichen wie bei Vergleichsbeispiel 1. Es wird ein Schaum von der Dicke 15,5 mm und der Rohdichte 28 kg/m³ erhalten.

Beispiel 2

84 Gew.-Teile Hochdruckpolyäthylen (wie Vergleichsbeispiel 1)
1 Gew.-Teil Dicumylperoxid
15 Gew.-Teile Azodicarbonamid
0,3 Gew.-Teile des Verschäumungshilfsmittels Pentaerythrityl-tetrakis-[3-(3,5-di-tert.butyl-4-hydroxiphenyl)-propionat] (Mol-Gew. 1178).
Die Verarbeitung und die Verarbeitungsbedingungen sind die gleichen wie beim Vergleichsbeispiel 1. Es wird ein Schaum von der Dicke 15 mm und der Rohdichte 27 kg/m³ erhalten.

Vergleichsbeispiel 2

84,2 Gew.-Teile des oben genannten Copolymeren aus Äthylen und Vinylacetat
0,8 Gew.-Teile Dicumylperoxyd
15 Gew.Teile Azodicarbonamid
Die Verarbeitung und die Verarbeitungsbedingungen sind die gleichen wie im Beispiel 1. Es wird ein Schaum von der Dicke 14 mm und der Rohdichte 30 kg/m³ erhalten.

Beispiel 3

84,2 Gew.-Teile des Copolymeren wie Vergleichsbeispiel 2
0,8 Gew.-Teile Dicumylperoxid
15 Gew.-Teile Azodicarbonamid
0,3 Gew.-Teile Verschäumungshilfsmittel wie im Beispiel 1 (Mol-Gew. 341)
Die Verarbeitung und die Verarbeitungsbedingungen sind die gleichen wie Vergleichsbeispiel 1. Es wird ein Schaum von der Dicke 14,5 mm und der Rohdichte von 28 kg/m³ erhalten.

Beispiel 4

84,2 Gew.-Teile des Copolymeren wie Vergleichsbeispiel 2

0,8 Gew.-Teile Dicumylperoxid
15 Gew.-Teile Azodicarbonamid
0,3 Gew.-Teile des Verschäumungshilfsmittels wie Beispiel 2 (Mol-Gew. 1178).
Die Verarbeitung und die Verarbeitungsbedingungen sind die gleichen wie Vergleichsbeispiel 1. Es wird ein Schaum von der Dicke 15 mm und der Rohdichte 28 kg/m³ erhalten.

Vergleichsbeispiel 3

79 Gew.-Teile des Copolymeren wie Vergleichsbeispiel 2
0,6 Gew.-Teile Dicumylperoxid
20,4 Gew.-Teile Azodicarbonamid
Die Verarbeitung und die Verarbeitungsbedingungen sind die gleichen wie Vergleichsbeispiel 1. Es wird ein Schaum von der Dicke 14,5 mm und der Rohdichte von 25 kg/m³ erhalten.

Beispiel 5

79 Gew.-Teile Copolymeres wie Vergleichsbeispiel 2
0,6 Gew.-Teile Dicumylperoxid
20,4 Gew.-Teile Azodicarbonamid
0,3 Gew.-Teile des Verschäumungshilfsmittels Octadecyl-3-(3,5-tert.butyl-4-hydroxiphenyl)-propionat (Mol-Gew. 531).
Die Verarbeitung und die Verarbeitungsbedingungen sind die gleichen wie Vergleichsbeispiel 1. Es wird ein Schaum von der Dicke 16,5 mm und der Rohdichte 19 kg/m³ erhalten.

Vergleichsbeispiel 4

89 Gew.-Teile Hochdruckpolyäthylen wie Vergleichsbeispiel 1
1 Gew.-Teil Dicumylperoxid
10 Gew.-Teile Azodicarbonamid
Die Verarbeitung und die Verarbeitungsbedingungen sind die gleichen wie Vergleichsbeispiel 1 Es wird ein Schaum von der Dicke 13 mm und der Rohdichte 50 kg/m³ erhalten.

Beispiel 6

89 Gew.-Teile Hochdruckpolyäthylen wie Vergleichsbeispiel 1
1 Gew.-Teil Dicumylperoxid
10 Gew.-Teile Azodicarbonamid
0,8 Gew.-Teile des Verschäumungshilfsmittels wie Beispiel 2 (Mol-Gew. 1178).
Die Verarbeitung und die Verarbeitungsbedingungen sind die gleichen wie Vergleichsbeispiel 1 Es wird ein Schaum von der Dicke 14 mm und der Rohdichte 43 kg/m³ erhalten.

Vergleichsbeispiel 5

67 Gew.-Teile Hochdruckpolyäthylen wie Vergleichsbeispiel 1
17 Gew.-Teile Niederdruckpolyäthylen
1 Gew.-Teil Dicumylperoxid

15 Gew.-Teile Azodicarbonamid

Die Verarbeitung und die Verarbeitungsbedingungen sind die gleichen wie Vergleichsbeispiel 1. Es wird ein Schaum von der Dicke 13,6 mm und der Rohdichte 32 kg/m$^3$ erhalten.

Beispiel 7

67 Gew.-Teile Hochdruckpolyäthylen wie Vergleichsbeispiel 5

17 Gew.-Teile Niederdruckpolyäthylen wie Vergleichsbeispiel 5

1 Gew.-Teil Dicumylperoxid

15 Gew.-Teile Azodicarbonamid

0,3 Gew.-Teile des Verschäumungshilfsmittels (Mol-Gew. 341)

Die Verarbeitung und die Verarbeitungsbedingungen sind die gleichen wie Vergleichsbeispiel 1. Es wird ein Schaum von der Dicke 15,5 mm und der Rohdichte 27 kg/m$^3$ erhalten.

Vergleichsbeispiel 6

84 Gew.-Teile Hochdruckpolyäthylen wie Vergleichsbeispiel 1

1 Gew.-Teil Dicumylperoxid

15 Gew.-Teile Azodicarbonamid

3 Gew.-Teile Farbkonzentrat blau (im Handel unter der Bezeichnung Sicoversal® blau 23075 erhältlich).

Die Verarbeitung und die Verarbeitungsbedingungen sind die gleichen wie Vergleichsbeispiel 1. Es wird ein Schaum von der Dicke 12 mm und der Rohdichte 36 kg/m$^3$ erhalten.

Beispiel 8

84 Gew.-Teile Hochdruckpolyäthylen wie Vergleichsbeispiel 1

1 Gew.-Teil Dicumylperoxid

15 Gew.-Teile Azodicarbonamid

3 Gew.-Teile Farbkonzentrat wie Vergleichsbeispiel 6

1 Gew.-Teil Verschäumungshilfsmittel wie Beispiel 1 (Mol-Gew. 341)

Die Verarbeitung und die Verarbeitungsbedingungen sind die gleichen wie Vergleichsbeispiel 1. Es wird ein Schaum von der Dicke 14 mm und der Rohdichte 30 kg/m$^3$ erhalten.

Beispiel 9

84 Gew.-Teile Hochdruckpolyäthylen

1 Gew.-Teil Dicumylperoxid

15 Gew.-Teile Azodicarbonamid

0,8 Gew.-Teile Tetrakis-(2,4-di-tert.butylphenyl)- 4,4'-biphenyldiphosphonit (Molgewicht 1034).

Die Verarbeitung und die Verarbeitungsbedingungen sind die gleichen wie beim Vergleichsbeispiel 1. Es wird ein Schaum von der Dicke 15 mm und der Rohdichte 27 kg/m$^3$ erhalten.

Beispiel 10

84 Gew.-Teile Hochdruckpolyäthylen wie Vergleichsbeispiel 1

1 Gew.-Teil Dicumylperoxid

15 Gew.-Teile Azodicarbonamid

0,5 Gew.-Teile des Verschäumungshilfsmittels von Beispiel 2

Die Verarbeitung und die Verarbeitungsbedingungen sind die gleichen wie bei Vergleichsbeispiel 1. Es wird ein Schaum von der Dicke 15,5 mm und der Rohdichte 25 kg/m$^3$ erhalten.

Vergleichsbeispiel 7

94,9 Gew.-Teile Hochdruckpolyäthylen wie Vergleichsbeispiel 1

1,1 Gew.-Teile Dicumylperoxid

4 Gew.-Teile Azodicarbonamid

Die Verarbeitung und die Verarbeitungsbedingungen sind die gleichen wie bei Vergleichsbeispiel 1. Es wird ein Schaum der Dicke 9,5 mm und der Rohdichte 115 kg/m$^3$ erhalten.

Beispiel 11

94,9 Gew.-Teile Hochdruckpolyäthylen wie Vergleichsbeispiel 1

1,1 Gew.-Teile Dicumylperoxid

4 Gew.-Teile Azodicarbonamid

2 Gew.-Teile Verschäumungshilfsmittel wie Beispiel 2

Die Verarbeitung und die Verarbeitungsbedingungen sind die gleichen wie bei Vergleichsbeispiel 1. Es wird ein Schaum der Dicke 11 mm und der Rohdichte 90 kg/m$^3$ erhalten.

Die Schaumstoffproben der Vergleichsbeispiele 1 bis 7 haben eine sehr rauhe und ungleichmässige Oberfläche, wohingegen die nach den erfindungsgemässen Beispielen 1 bis 11 hergestellten Probekörper eine glatte und gleichmässige Oberfläche aufweisen.

Die Beispiele zeigen deutlich, dass bei Anwendung der erfindungsgemässen Verschäumungshilfsmittel die Rohdichten beträchtlich gesenkt werden.

**Patentansprüche**

1. Verfahren zur Herstellung von Schaumstoffen aus Polyolefinen durch peroxidische Vernetzung und Verschäumen durch ein chemisches Schäummittel unter Zusatz eines Verschäumungshilfsmittels sowie ggf. weiterer Hilfsmittel, dadurch gekennzeichnet, dass man als Verschäumungshilfsmittel 0,05 bis 3 Gew.-%, bezogen auf eingesetztes Polyolefin, eines sterisch gehinderten Phenols mit 1 bis 4 phenolisch gebundenen OH-Gruppen, wobei die phenolischen Struktureinheiten jeweils einwertig sind, und/oder eines organischen Diphosphonits verwendet.

2. Verfahren nach Anspruch 1, dadurch gekennzeichnet, dass sich die organischen Diphosphonite vorzugsweise von 4,4-Biphenylendiphosphoniten herleiten.

3. Verfahren nach einem der Ansprüche 1 bis 4, dadurch gekennzeichnet, dass als Schäummittel solche mit einem Zersetzungspunkt bzw. Zersetzungsbereich ab 190°C eingesetzt werden.

## Claims

1. Process for the production of foam materials from polyolefins by peroxidic cross-linking and foaming by means of a chemical foaming agent with addition of a foaming auxiliary as well as optionally further auxiliaries, characterized in that there is used as foaming auxiliary 0.05% by weight to 3% by weight related to polyolefin employed, of a sterically hindered phenol with 1 to 4 phenolically connected OH-groups, wherein the phenolic structural units are respectively monofunctional, and/or of an organic diphosphonite.

2. Process according to claim 1, characterized in that the organic diphosphonites are preferably derived from 4,4-biphenylendiphosphonites.

3. Process according to one of claims 1 to 4, characterized in that there are employed as foaming agents those with a decomposition point or decomposition region above 190°C.

## Revendications

1. Procédé pour la préparation de mousses de polyoléfines par réticulation par un peroxyde et moussage par un agent moussant chimique, avec addition d'un adjuvant de moussage et éventuellement d'autres adjuvants, caractérisé en ce que l'on utilise comme adjuvant de moussage 0,05 à 3% en poids, sur la base de la polyoléfine utilisée, d'un phénol à empêchement stérique ayant de 1 à 4 groupes OH à laision phénolique, les unités structurales phénoliques étant dans chaque cas monovalentes, et/ou d'un diphosphonite organique.

2. Procédé selon la revendication 1, caractérisé en ce que les diphosphonites organiques sont de préférence des dérivés de 4,4-biphénylènediphosphonites.

3. Procédé selon l'une des revendications 1 ou 2, caractérisé en ce que l'on utilise des agents moussants ayant un point de décomposition ou un intervalle de décomposition supérieur à 190°C.